(19) Europäisches Patentamt
European Patent Office
Office européen des brevets

(11) Veröffentlichungsnummer: **0 375 625 A1**

(12) # EUROPÄISCHE PATENTANMELDUNG

(21) Anmeldenummer: 89810968.1

(51) Int. Cl.$^5$: **F02D 41/38, F02D 41/24**

(22) Anmeldetag: 20.12.89

(30) Priorität: 21.12.88 CH 4718/88

(43) Veröffentlichungstag der Anmeldung: 27.06.90 Patentblatt 90/26

(84) Benannte Vertragsstaaten: AT BE DE ES FR GB IT NL SE

(71) Anmelder: AMMANN-DUOMAT VERDICHTUNG AG
Eisenbahnstrasse 25
CH-4900 Langenthal(CH)

(72) Erfinder: Leibundgut, Hans Ulrich
Weierhalten
CH-3128 Kirchenthurnen(CH)

(74) Vertreter: Keller, René, Dr. et al
Patentanwälte Dr. René Keller & Partner
Postfach 12
CH-3000 Bern 7(CH)

(54) **Regelvorrichtung für einen Verbrennungsmotor.**

(57) Die Regelvorrichtung für einen Verbrennungsmotor, insbesondere einen Dieselmotor (1), mit einer Leistungsübertragung (7) auf einen Antrieb (9), deren Übersetzungsverhältnis veränderbar ist, hat einen Proportionalregler (4) mit einem Drehzahlmesser (2), einem Stellglied (3) zur Einstellung der Treibstoffeinspritzmenge und einen Regler (4) mit einstellbarem Drehzahlsollwert, und eine Überwachungs- und Einstelleinrichtung (5). Die Solldrehzahl (n) des Motors (1) bei unterschiedlichen Drehmomenten wird von dem Proportionalregler (4) entlang einer durch den Drehzahlsollwert vorgegebenen Regelgeraden nachgeregelt. Verläßt der Proportionalregler (4) einen in einem Festwertspeicher (31) gespeicherten Drehmoment-Drehzahlsollwertbereich des Motors (1), so verändert die Überwachungs- und Einstelleinrichtung (5) den Sollwert des Proportionalreglers (4) und allenfalls die Übertragungscharakteristik der Leistungsübertragung (7) derart, daß der Proportionalregler (4) wieder innerhalb des Bereichs arbeitet.

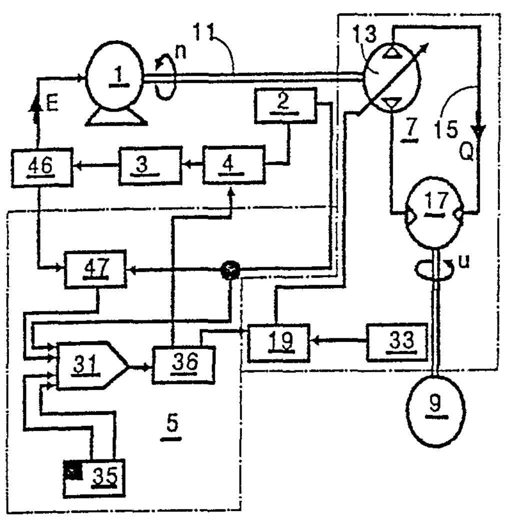


Fig. 3

EP 0 375 625 A1

# Regelvorrichtung für einen Verbrennungsmotor

Die Erfindung betrifft eine Regelvorrichtung für einen Verbrennungsmotor, insbesondere einen Dieselmotor, gemäß dem Oberbegriff des Patentanspruchs 1.

Regelvorrichtungen dieser Art, werden insbesondere zur Regelung von Dieselmotoren verwendet, wie sie u. a. bei Baumaschinen eingesetzt werden. Diese Maschinen arbeiten z. B. mit einem hydraulischen Getriebe und annähernd konstanter Motordrehzahl bei variabler Last, d.h. variablem Motordrehmoment. Um eine konstante Umdrehungszahl der Antriebsräder der Baumaschine bei Lastwechseln zu erreichen, hat die Regelvorrichtung einen Proportionalregler. Ein Abfühlelement mißt den Ist-Wert der Umdrehungszahl. Entsprechend einer Abweichung zum am Regler eingestellten Umdrehungssollwert wird durch ein Stellglied die Treibstoffeinspritzmenge erhöht bzw. erniedrigt. Da es sich um einen Proportionalregler handelt, weicht bei üblichen Dieselmotoren die Umdrehungszahl zwischen maximalem und minimalem Drehmoment bei einer Solldrehzahl von z. B. 2400 Umdrehungen pro Minute um etwa zweihundert Umdrehungen pro Minute ab.

Bei einer vom Typ des Dieselmotors abhängenden individuellen Drehzahl und Drehmoment wird eine minimale auf die abgegebene Motorleistung bezogene Treibstoffmenge (z. B. in Gramm pro Kilowattstunde [g/kWh]) verbraucht. Wird die Drehzahl oder das Drehmoment erhöht oder erniedrigt, so steigt in beiden Fällen die Treibstoffmenge an. Wird die Drehzahl mit obigem Proportionalregler geregelt, so verbraucht der Motor je nach benötigtem Drehmoment eine mehr oder weniger große Treibstoffmenge gegenüber der benötigten Treibstoffmenge bei optimaler Drehzahl und Drehmoment.

Aufgabe der Erfindung ist es, eine einfache Regelvorrichtung zu schaffen, die mit einem z. B. bei Dieselmotoren für Baumaschinen bereits vorhandenem, ein Abfühlelement, einen Regler und ein Stellglied enthaltenden Regelkreis und einer zusätzlichen Überwachungs- und Einstelleinrichtung derart auf den Motor und auf eine Leistungsübertragung zwischen Motor und Lastantrieb einwirkt, daß unerwünschte Betriebszustände, insbesondere ein auf die Leistung bezogen zu hoher Treibstoffverbrauch vermieden wird.

Die erfindungsgemäße Lösung dieser Aufgabe ist Gegenstand des Patentanspruchs 1.

Gegenstand der Ansprüche 2 bis 7 sind bevorzugte Ausführungsformen der erfindungsgemäßen Regelvorrichtung.

Im folgenden werden Ausführungsbeispiele der erfindungsgemäßen Regelvorrichtung anhand der Zeichnungen näher erläutert. Es zeigen:

Fig. 1 ein Funktionsblockbild der Regelvorrichtung eines Dieselmotors,

Fig. 2 ein Kennlinienfeld des Motordrehmoments des Dieselmotors in Abhängigkeit von der Drehzahl bei abgegebener Motorleistung und auf diese normiertem Treibstoffverbrauch als Parameter,

Fig. 3 ein Funktionsblockbild einer Variante der Regelvorrichtung, und

Fig. 4 einen Ausschnitt aus einem Funktionsblockbild einer Variante mit Zeitverzögerung.

Das in Figur 1 dargestellte Funktionsblockbild zeigt einen Dieselmotor 1 als Verbrennungsmotor, einen handelsüblichen Drehzahlmesser 2 als Abfühlelement, eine Treibstoffeinspritzpumpe 3 als Stellglied und einen Drehzahlregler 4 als Proportionalregler, sowie eine Überwachungs- und Einstelleinrichtung 5 und eine hydraulische Leistungsübertragungseinheit 7, die auf Antriebsräder, welche hier durch ein einziges Rad 9 symbolisch dargestellt sind, einer nicht dargestellten Maschine, z. B. einer Baumaschine (Straßenwalze) wirken.

Eine Welle 11 des Dieselmotors 1 wirkt in der hydraulischen Leistungsübertragungseinheit 7 auf eine Hydraulikpumpe 13, die Hydrauliköl durch eine Leitung 15 in einen Hydraulikmotor 17 zum Antrieb der Antriebsräder 9 pumpt. Die pro Umdrehung der Welle 11 durch die Pumpe 13 geschöpfte Hydraulikölmenge Q ist z. B. durch Veränderung des Verdrängungsvolumen der Pumpe 13 über eine Leistungsübertragungseinstelleinheit 19 veränderbar und erzeugt eine Drehzahl u der Antriebsräder 9. Das pro Zeiteinheit geförderte Volumen Hydrauliköl ist von der Drehzahl n der Pumpe 13, welche gleich der Drehzahl n des Dieselmotors 1 ist (sie kann auch proportional sein, falls ein mechanisches Getriebe zwischengeschaltet ist), und der momentanen Größe des Verdrängungsvolumens der Pumpe 13 abhängig. Die Hydraulikölmenge Q ist durch das Leistungsübertragungseinstellelement 19 variierbar. Bei gleichbleibender aufgenommener Leistung kann durch die Einstellung des Ver drängungsvolumens die Drehzahl u der Antriebsräder 9 verändert werden, wobei selbstverständlich bei zunehmender Drehzahl u das von den Antriebsrädern 9 abgegebene Drehmoment abnimmt.

Der Drehzahlregler 4 ist mit der Treibstoffpumpe 3 und dem Drehzahlmesser 2 verbunden. Er steuert die durch die Treibstoffeinspritzpumpe 3 eingespritzte Treibstoffmenge und beeinflußt hierdurch die Drehzahl n des Motors 1. Da es sich um einen Proportionalregler mit vorgegebenem Drehzahlsollwert $n_s$ handelt, ist die Drehzahl nicht fest, sondern ändert sich in Abhängigkeit vom Motordrehmoment M auf einer verhältnismäßig steilen Regelgeraden; siehe z. B. die weiter unten beschriebenen Regelgeraden 41, 43, 44 und 47 in Figur 2.

Die Überwachungs- und Einstelleinrichtung 5 hat eine mit einer Prüfeinheit 31 verbundene Drehmomentermittlungseinheit 29. Die Drehmomentermittlungseinheit 29 kann z. B. als ein nicht dargestellter, auf der Welle 11 aufgeklebter Dehnungsmeßstreifen, dessen Widerstandsänderung durch eine dem Drehmoment M proportionale Torsion der Welle 11 über Schleifringe abgenommen wird, bestimmt werden. Ein Festwertspeicher 35 und ein Fuhrungsgrößengeber 36 sind mit der Prüfeinheit 31 elektrisch verbunden, wobei der Führungsgrößengeber 36 mit dem Leistungsübertragungseinstellelement 19 und dem Drehzahlregler 4 verbunden ist. Im Festwertspeicher 35 ist ein zweidimensionales Feld (Array) als Bereich aus Wertepaaren der Drehzahl n und des ihr zugeordneten Motordrehmoments M des Motors 1 gespeichert. Der Drehzahlmesser 33 arbeitet analog zum Drehzahlmesser 2 und ist mit dem Leistungsübertragungseinstellelement 19 verbunden.

Die Leistungsübertragungseinheit 7 arbeitet als selbständiger Regelkreis mit dem Ziel, die Drehzahl u des Antriebsrades 9 entsprechend der vom Fahrer der Baumaschine gemachten Vorgabe konstant zu halten.

Der Zusammenhang des Motordrehmoments M als Ordinate und der Drehzahl n des Motors 1 als Abszisse ist in Figur 2 in einem Diagramm dargestellt. Ein Parameter einer Kurvenschar ist die abgegebene Motorleistung P und ein Parameter der anderen Kurvenschar ist ein auf die abgegebene Motorleistung P bezogener Treibstoffverbrauch V des Motors 1. Die Indizes der Bezeichnungen an den Treibstoffverbrauchskurven V bezeichnen mit steigender Zahl einen jeweils um eine gleiche Menge zunehmenden Treibstoffverbrauch, gemessen z. B. in [g/kWh] oder [g/PSh]. Ebenso bezeichnen die steigenden Indizes an den Motorleistungskurven P eine Motorleistungszunahme um jeweils einen gleichen Betrag.

Eine Kurve 37 in Figur 2 stellt eine Grenze dar, die der Motor 1 nur kurzzeitig, aber nicht im Dauerbetrieb überschreiten darf. Eine Kurve 39 in Fig. 2 darf unter keinen Umständen, auch nicht kurzzeitig ohne Schädigung des Motors 1 überschritten werden.

Unter Berücksichtigung des Motoranwendungsgebiets für z. B. Baumaschinen ist ein vollständig schraffiertes Sollwertefeld 45 im Diagramm festgelegt. Das Sollwertefeld 45 ist durch die Kurve 37, eine einer maximalen Solldrehzahl zugeordnete Regelgerade 44, die Kurve des Treibstoffverbrauchs $V_4$ (230 g/kWh), der aus ökonomischen Gründen nicht zu höheren Treibstoffverbrauchswerten überschritten werden soll, und eine einer minimalen Solldrehzahl $n_{s\ A}$ zugeordnete Regelgerade 47 begrenzt. Die Drehmoment-Drehzahlsollwertepaare $n_s$ und M des Sollwertefeldes 45 sind, wie unten dargelegt wird, in dem Festwertspeicher 35 abgelegt. Die Lage des Sollwertefeldes 45 ist derart gewählt worden, daß unerwünschte Betriebszustände, wie ein auf die Leistung bezogener hoher Treibstoffverbrauch, sowie eine Überlastung des Motors 1 vermieden werden. Ein Gebiet minimalen Treibstoffverbrauchs wird durch eine Kurve $V_1$ eingerahmt und liegt aus obigen Gründen innerhalb des Sollwertefeldes 45.

Die Ablage der Drehmoment-Drehzahlwertesollpaare $n_s$ und M im Festwertspeicher 35 erfolgt nicht unter den tatsächlichen Werten der Wertepaare, sondern zur Reduzierung von Speicherplätzen unter normierten Wertepaaren. Hierzu wird eine Auflösung, welche eine ausreichende Verarbeitungsgenauigkeit bei einem minimalen Speicherplatzbedarf ermöglicht, festgelegt. Der gesamte Drehzahlbereich des Sollwertefeldes 45 beträgt bei einem typischen Dieselmotor etwa 1200 U/min und für den Drehmomentbereich etwa 110 Nm. Im folgenden werden die typischen Werte des verwendeten Motors in Klammern angegeben, wobei sich diese Werte ohne weiteres auf einen anderen Motortyp übertragen lassen. Damit die Regelung jedoch einwandfrei funktioniert, wird von einem Regelfeld 48 (in Fig. 2 doppelt eingerahmt) mit einer unteren während des Betriebes erreichbaren Drehzahl $n_{r\ u}$ = $n_1$ (~1200 U/min) und einer oberen Drehzahl $n_{ro}$ = $n_8$ (~2600 U/min), sowie von einem unteren Drehmoment $M_{ru}$ (~150 Nm) und einem oberen Drehmoment $M_0$ = $M_6$ (~360 Nm) ausgegangen. Hierdurch ergibt sich ein gesamter abzuspeichernder Wertebereich für die Drehzahl $n_d$ von $n_8$ minus $n_1$ (von ~1400 U/min) und für das Drehmoment $M_d$ von $M_6$ minus $M_{ru}$ - (~210 Nm). Damit der Wertebereich der Drehzahl $n_d$ einfach speicherbar ist, wird er in zweiunddreißig Schritte und der Wertebereich des Drehmoments $M_d$ in 16 Schritte zerlegt.

Zur Zerlegung der Schritte wird von einem abzuspeichernden Drehzahlwert der Wert der unteren Drehzahl $n_u$ abgezogen, der erhaltene Wert durch zweiunddreißig dividiert und das Ergebnis gerundet. Das Ergenis ist die normierte Drehzahl. Die normierten Drehzahlwerte liegen zwischen null und einunddreißig. Analog wird mit dem Drehmoment verfahren, dessen normierte Werte dann zwischen null und fünfzehn liegen.

Die aus den normierten Drehzahlwerten und den normierten Drehmomenten des Regelfeldes 48 gebildeten normierten Drehmoment-Drehzahlwertesollpaare werden im Festwertspeicher 35 derart abgespeichert, daß die Werte des normierten Drehzahlwertes x-Stellen (die Stellen fünfzehn bis zehn im "high byte") und die Werte des normierten Drehmoments y-Stellen (die Stellen neun und acht im "high byte" und sieben bis fünf im "low byte") in einem abzuspeichernden "Sollwert"-Byte einnehmen.

Zusätzlich zu den x- und y-Stellen im abzuspeichernden "Sollwert"-Byte werden z-Stellen (die Stellen vier bis zwei) zur Definition der Lage der Drehmoment-Drehzahlwertepaare in unten beschriebenen Teilfeldern 49 bis 54 und des Sollwertefeldes 45 innerhalb des Regelfeldes 48 festgelegt. (Das Sollwertefeldes 45 erhält die Kennzeichnung "000".) In Figur 2 sind sechs innerhalb des Regelfeldes 48, aber außerhalb des Sollwertefeldes 45 liegende Teilfelder 49 bis 54 dargestellt.

Das Teilfeld 49 (Kennzeichnung "001") liegt bei hohen Drehzahl- und Drehmomentwerten n und M und wird durch die Grenze des Regelfeldes 48 gegen hohe Drehzahl- und Drehmomentwerte, die Kurve 37 und die Gerade 44 begrenzt.

Das Teilfeld 50 (Kennzeichnung "010") liegt bei niedrigen Drehzahl- und Drehmomentwerten n und M und wird durch die Grenze des Regelfeldes 48 gegen niedrige Drehzahl- und Drehmomentwerte, die Gerade 47 und eine annähernd zur Kurve $P_1$ parallel Kurve 56, die im Schnittpunkt der Geraden 47 mit der Kurve $V_4$ beginnt, begrenzt.

Das Teilfeld 51 (Kennzeichnung "011") liegt bei hohen Drehmomentwerten M oberhalb der Kurve 39. Es wird durch die Grenze des Regelfeldes 48 gegen hohe Drehmomentwerte, die Grenze des Regelfeldes 48 gegen tiefe Drehzahlwerte, die Kurve 39 und die Gerade 44 begrenzt. Wie bereits oben dargelegt, darf der Motor 1 nie im Teilfeld 51 arbeiten.

Das Teilfeld 52 (Kennzeichnung "100") wird durch die Kurven 37 und 39, die Gerade 44 und die Begrenzung des Regelfeldes 48 zu niedrigen Drehzahlwerten begrenzt.

Das Teilfeld 53 (Kennzeichnung "101") wird durch die Grenze des Regelfeldes 48 gegen hohe Drehzahlwerte, die Gren ze des Regelfeldes 48 gegen niedrige Drehmomentwerte, die Kurve $V_4$ und die Kurve 37 begrenzt.

Das Teilfeld 54 (Kennzeichnung "110") wird durch die Kurven 37 und 56, sowie die Begrenzung des Regelfeldes 48 zu niedrigen Drehzahlwerten und die Gerade 47 begrenzt.

Die im Festwertspeicher 35 in "Sollwert"-Bytes abgespeicherten Daten des Regelfeldes 48 enthalten nach obigem Algorithmus die x-, y- und z-Stellen.

Der Istwert der Drehzahl n der Welle 11 und der Istwert des Drehmoments M werden durch die Prüfeinheit 31 im Takt eines nicht näher dargestellten Taktgebers abgefragt und mit einem Rechenalgorithmus analog der oben beschriebenen Abspeicherung verarbeitet. Der Rechenalgorithmus rundet den ermittelten Drehzahl- und den Drehmomentistwert, teilt jeden durch den gleichen Wert, wie die abgespeicherten normierten Werte (zweiunddreißig bzw. sechzehn) und rundet das erhaltene Ergebnis. Der normierte Drehzahlistwert wird in einem "Istwert" -Byte in der Prüfeinheit an den x-Stellen und der normierte Drehmomentistwert an den y-Stellen abgelegt.

Die Prüfeinheit 35 sucht anschließend im Festwertspeicher 35 "Sollwert"-Bytes, deren x-Stellen mit den x-Stellen des in der Prüfeinheit 31 gespeicherten "Istwert"-Bytes übereinstimmen. Es werden mehrere "Sollwert"-Bytes gefunden, die sich nur durch die y- und z-Stellen voneinander unterscheiden. In einem nächsten Auswahlschritt wird auf Gleichheit der y-Stellen der eben ausgewählten "Sollwert"-Bytes aus dem Festwertwertspeicher 35 mit der y-Stelle des in der Prüfeinheit 31 gespeicherten "Istwert"-Bytes geprüft, und ein einziges "Sollwert"-Byte hierbei gefunden. Eine fehlende Übereinstimmung von x- und y-Stellen zwischen einem der im Festwertspeicher 35 abgespeicherten "Sollwert"-Bytes und dem abgespeicherten "Istwert"-Byte in der Prüfvorrichtung 31 könnte nur im Leer- und im Hochlauf des Motors 1 erfolgen; hierbei ist die Regelvorrichtung jedoch, wie unten beschrie ben, nicht eingeschaltet. Die z-Stellen des gefundenen "Sollwert"-Bytes ergeben eine Kennzeichnung, welche anzeigt, ob das Motoristwertepaar des in der Prüfeinheit 31 abgespeicherten "Istwert"-Bytes im Sollwertefeld 45 oder in einem der Teilfelder 49 bis 54 liegt.

Arbeitet der Motor im Sollwertefeld 45 (Kennzeichnung ("000"), gibt die Prüfeinheit kein Signal an den Führungsgrößengeber 36.

Arbeitet der Motor im Teilfeld 52 (Kennzeichnung "100") oder im Teilfeld 54 (Kennzeichnung ("110"), gibt, wie weiter unten an einem Beispiel noch näher beschrieben, die Prüfeinheit 31 an den Führungsgrößengeber 36 ein Signal, wodurch dieser dem Drehzahlregler 4 eine um $\delta n$ erhöhte Solldrehzahl $n_s$ .

Arbeitet der Motor im Teilfeld 53 (Kennzeichnung "101"), gibt, wie ebenfalls weiter unten näher beschrieben, die Prüfeinheit 31 an den Führungsgrößengeber 36 ein anderes Signal, wodurch dieser dem Drehzahlregler 4 eine um $\delta n$ verringerte Solldrehzahl $n_s$.

Kommt der Motor in das Teilfeld 49 (Kennzeichnung "001") oder in das Teilfeld 51 (Kennzeichnung "011"), so ist eine Überlastung des Motors 1 vorhanden. Die Prüfvorrichtung 31 gibt an den Fuhrungsgrößengeber 36 ein Signal, durch das dieser dem Drehzahlregler 4 einen Drehzahlsollwert $n_{s\ A}$ für die Regelgerade 44 vorgibt. Der Führungsgrößengeber 36 gibt außerdem der Leistungsübertragungseinheit 7 über die Leistungsübertragungseinstelleinheit 19 ein Signal den Sollwert für die Drehzahl u des Antriebsrades 9 solange zu reduzieren, bis sich der Motor 1 infolge reduzierter Belastung wieder außerhalb des Teilfeldes 49 im Teilfeld 52 oder 53 befindet. Als Folge hiervon fährt die Baumaschine solange mit reduzierter Geschwindigkeit, bis die dem Motor 1 abverlangte Leistung unterhalb der Kurve 37 liegt.

Das Teilfeld 50 (Kennzeichnung "010"), wird nur bei Motorhochlauf von seinem Leerlaufbetrieb aus durchlaufen. Von der Prüfeinheit 31 wird über den Führungsgrößengeber 38 ebenfalls ein Drehzahlsollwert $n_{s\,A}$ an den Drehzahlregler 4 gegeben.

Zur Inbetriebnahme des Motors ist die Regelvorrichtung ausgeschaltet. Der Motor 1 wird gestartet. Nach dem Start läuft er mit einer durch die eingespritzte Treibstoffmenge bestimmten Leerlaufdrehzahl. Nach Einschalten der Regelvorrichtung durch den Fahrzeugführer der Baumaschine gibt die Prüfvorrichtung 31 über den Führungsgrößengeber 36 dem Drehzahlregler 4 den Drehzahlsollwert $n_{s\,A}$ und ein nicht dargestellter Taktgeber in der Prüfeinheit 31 aktiviert den Drehzahlmesser 2 und die Drehmomentermittlungseinheit 29 zur Durchführung der ersten Messung.

Wie oben bereits ausgeführt, dient die Regelvorrichtung dazu, die Baumaschine bei unterschiedlicher benötigter Leistung mit konstanter Geschwindigkeit, d. h. konstanter Drehzahl ihrer Antriebsräder 9 arbeiten zu lassen. Zur Funktionsbeschreibung der Regelvorgänge wird davon ausgegangen, daß der Motor 1, wie in Figur 2 gezeigt, im Arbeitspunkt $W_1$ mit einer Drehzahl $n_{s1}$ = $n_6$ (~ 2200 U/min) bei der Leistung von $P_5$ (~ 60 kW) betrieben wird, wobei eine Treibstoffmenge $V_{w1}$ von etwas weniger als $V_3$ (~ 223 g/kWh) verbraucht wird. Der Arbeitspunkt $W_1$ liegt auf der Regelgeraden 41 des auf den Motor 1 einwirkenden Regelkreises (Drehzahlmesser 2, Treibstoffeinspritzpumpe 3 und Drehzahlregler 4). Die Drehzahl $n_{s1}$ des Motors 1 wirkt über die Welle 11 auf die Hydraulikpumpe 13, welche einen dem Verdrängungsvolumen entsprechenden Ölfluß $Q_1$ in den Hydraulikmotor 17 fördert, wodurch die Antriebsräder 9 mit einer Drehzahl $u_{w1}$ laufen.

Verringert sich die geforderte Leistung von $P_5$ auf $P_4$ (50 kW), weil die Baumaschine z. B. von einer Horizontalen in eine abfallende Schräge fährt, so verläuft die Regelung durch den Regelkreis 2 - 4 entlang der Regelgeraden 41 bis zum Schnittpunkt $K_1$ der Regelgeraden 41 mit der Kurve $V_4$. Nach Überschreiten des Punktes $K_1$ stellt die Prüfeinheit 31 mit ihrem nächsten Abfrageimpuls des Taktgebers fest, daß die neuen Drehmoment- und Drehzahlistwerte n und M nicht mehr im Sollwertefeld 45, sondern im Teilfeld 53 liegen. Die Prüfeinheit 31 gibt nach dem Abfrage- und Vergleichsvorgang ein Signal an den Führungsgrößengeber 36, der daraufhin dem Drehzahlregler 4 einen um $\sigma n$ (~ 160 U/min) verringerten neuen Drehzahlsollwert $n_{s2}$ vorgibt. Der selbständige Regelkreis der Leistungsübertragungseinheit 7 regelt dabei die sich reduzierende Drehzahl n der Welle 11 derart selbsttätig aus, daß die Drehzahl u des Antriebsrads 9 annähernd konstant bleibt. Dabei ist es in einer verbesserten Ausführung ohne weiteres möglich, daß der Führungsgrößengeber 36 über die ohnehin bestehende Verbindung zur Leistungsübertragungseinstelleinheit 19 die sich einstellende Drehzahlreduktion der Welle 11 derart signalisiert, daß die Drehzahl u des Antriebrads 9 verzögerungsfrei nachgeregelt werden kann. Durch die Vorgabe des neuen Drehzahlsollwertes $n_{s2}$ arbeitet der Motor 1 nun in einem Arbeitspunkt $W_3$ auf einer Regelgeraden 42 mit einer Drehzahl $n_{w3}$ (~ 2100 U/min), einem Drehmoment $M_3$, einem Treibstoffverbrauch von $V_3$ (~ 225 g/kWh) und weiterhin mit der Leistung $P_4$ (50 kW).

Würde die Überwachungs- und Einstelleinrichtung 5 nicht eingegriffen haben oder nicht vorhanden sein, so würde der Motor 1 im Arbeitspunkt $W_2$ auf der Regelgeraden 41 mit einem erhöhten Treibstoffverbrauch der zwischen der Kurve $V_4$ und $V_5$ liegt arbeiten (~ 232 g/kWh).

Wird die geforderte Leistung z. B. von $P_4$ wieder auf $P_5$ erhöht, weil die Baumaschine z. B. wieder in der Horizontalen fährt, so erfolgt die Regelung des Motors 1 entlang der Regelgeraden 42 zu einem neuen Arbeitspunkt $W_4$ mit einer neuen Drehzahl $n_{w4}$, ohne daß die Überwaohungs- und Einstelleinrichtung 5 eingreift.

Bei einer erneuten Leistungserhöhung auf etwa 10% über $P_6$, weil z. B. die Baumaschine eine steil ansteigende Schräge hinauffährt, verläuft die Regelung des Motors 1 durch den Regelkreis 2 - 4 entlang der Regelgeraden 42 zu höheren Drehmomenten M hin bis die Regelkennlinie 42 die Kurve 37 in einem Punkt $K_2$ schneidet. Die Prüfeinheit 31 stellt fest, daß die neuen Drehmoment- und Drehzahlistwerte n und M nicht mehr im Sollwertefeld 45, sondern im Teilfeld 52 liegen. Sie gibt ein entsprechendes Signal an den Führungsgrößengeber 36, der daraufhin dem Drehzahlregler 4 einen um $\delta n$ (~ 160 U/min) vergrößerten, neuen Drehzahlsollwert $n_s$, der wieder $n_{s1}$ ist, vorgibt. Der Motor 1 arbeitet jetzt im Punkt $K_3$ auf der Regelgeraden 41. Da die geforderte Leistung (etwa 10% höher als $P_6$) aber immer noch nicht erreicht ist, verläuft die Regelung des Motors 1 entlang der Regelgeraden 41 bis zum Schnittpunkt $K_4$ der Regelgeraden 41 mit der Kurve 37. Die Überwachungs-und Einstelleinrichtung 5 greift erneut ein und es erfolgt eine erneute Vorgabe eines neuen Drehzahlsollwertes $n_{s3}$. Der Motor 1 arbeitet nun in einem Arbeitspunkt $W_5$ auf einer Regelgeraden 43 mit einer Drehzahl $n_{w5}$, und einem Treibstoffverbrauch von etwas we-

niger als $V_3$ (~ 224 g/kWh).

Die direkte Messung des Motordrehmoments M erfordert einen verhältnismäßig großen technischen Aufwand. Das Drehmoment M kann auch indirekt, wie in Figur 3 zu sehen ist, aus der Treibstoffeinspritzmenge E pro Arbeitshub, die mit einem Treibstoffmengenmeßgerät 46 feststellbar ist und der Drehzahl n des Motors 1, die bereits mit dem Drehzahlmesser 2 gemessen wird, mit einer Drehzahlermittlungseinheit 47, die mit dem Drehzahlmesser 2 und dem Gerät 46 verbunden ist, bestimmt werden. Bei konstanter Drehzahl n ist das abgegebene Drehmoment M des Motors 1 proportional zur Treibstoffeinspritzmenge E pro Arbeitshub. Die Werte der Ordinate des in Fig. 2 dargestellten Kennfeldes, auf der das Motordrehmoment M aufgetragen ist, können somit durch die Werte der Treibstoffeinspritzmenge E pro Zeiteinheit ersetzt werden.

Anstatt die Einspritzmenge mit dem Einspritzmengenmeßgerät 46 zu messen, kann in der Einspritzpumpe 3 eine entsprechende physikalische Größe abgegriffen werden. So kann beispielsweise bei einer elektrisch geregelten Einspritzpumpe 3 dies eine elektrische Größe sein, die ein Maß für die eingespritzte Treibstoffmenge darstellt. Bei einer mechanisch oder hydraulisch geregelten Einspritzpumpe 3 kann eine beliebige Größe, wie beispielsweise ein mechanischer Weg, eine Kraft oder ein Druck als Maß für die eingespritzte Treibstoffmenge verwendet werden.

Anstelle der mit der Hydraulikleitung 15 verbundenen Hydraulikpumpe 13 und des Hydraulikmotors 17 zur Leistungsübertragung können z. B. auch ein Generator-Motorantrieb, ein stufenloses mechanisches Getriebe oder andere in ihrem Übersetzungsverhältnis veränderbare Getriebetypen verwendet werden.

Anstelle die Drehzahl-Drehmomentwertepaare mit einem einzigen Byte abzuspeichern, können auch zwei Bytes oder mehrere verwendet werden, wodurch die Auflösung der Drehzahl-und Drehmomentwerte n und M erhöht wird.

Der Regelkreis mit dem Drehzahlmesser 2, der Treibstoffeinspritzpumpe 3 und dem Drehzahlregler 4 übernimmt die sofortige Regelung des Motors 1 und die Überwachungs- und Einstelleinrichtung 5 greift bei Herausfallen des Drehzahl-Drehmomentistwertepaares n und M aus dem vorgegebenen Sollwertefeld 45 erst mit dem folgenden Puls des Taktgeber der Prüfeinheit 31 ein, welcher den Meß- und Auswertevorgang initiert. Der Zeitpunkt der Verschiebung der Regelkennlinie auf den neuen Drehzahlsollwert $n_s$ um $\delta n$ wird in einer Variante, deren teilweises Funktionsblockbild in Fig. 4 dargestellt ist, verzögert. Eine in Figur 4 dargestellte Prüfeinheit 59 (umrahmtes Feld), deren Anschlüsse analog zu der Prüfeinheit 31 in den Figuren 1 und 3 sind, hat einen Speicher 60, einen Taktgeber 62, ein Zeitglied 64, ein Flipflop 66 ein UND-Gatter 68 und einen Vergleicher 70. Der Taktgeber 62 sendet Taktpulse, deren zeitlicher Abstand einstellbar ist, an den Drehzahlmesser 2 und die Drehmomentermittlungseinheit 29 zur Auslösung des Meßvorgangs, sowie an den Zwischenspeicher 60 zum Abspeichern der durch den Drehzahlmesser 2 und die Drehmomentermittlungseinheit 29 gemessenen Werte, an das Zeitglied 64 zum Start eines Zeitablaufes und an den Vergleicher 70 zum Start des bereits oben beschrieben Vergleichsablaufes. Das Zeitglied 64 setzt mit Beginn des Zeitablaufes das Flip-flop 66, welches das als Tor wirkende UND-Gatter 68 derart sperrt, daß Signale des Vergleichers 70, die dieser aus den z-Stellen des gefundenen "Sollwert"-Bytes ableitet, nicht durchgelassen werden. Sollte nun der Vergleicher feststellen, daß die Drehzahl-Drehmomentistwerte n und M außerhalb des Sollwertefeldes 45 in den Teilfeldern 50, 52, 53 oder 54 liegen, erfolgt keine Änderung des Drehzahlsollwertes $n_s$ und der Stellgröße durch den Führungsgrößengeber 36. Stellt der Vergleicher 70 jedoch fest, daß ein ermitteltes "Istwert"-Byte in dem Teilfeld 49 oder 51 liegt, wird das UND-Gatter 68 mit einer Leitung 72, welche vom Vergleicher 70 zum Führungsgrössengeber36 direkt läuft, umgangen und die Signale direkt dem Fuhrungsgrößengeber 36 übermittelt. Bei Istwerten in den Teilfeldern 50, 52 und 53 erfolgt eine Änderung erst, wenn nach Ablauf der mit den Zeitglied 64 eingestellten Zeit das Flipflop 66 zurückgesetzt worden ist, dieses das UND-Gatter 68 "geöffnet" hat und bei der folgenden Messung das Drehzahl-Drehmomentistwertepaar n und M immer noch außerhalb des Sollwertefeldes 45 liegt. Der Vorteil dieser Schaltung liegt darin, daß die Stellgröße der Leistungsübertragungseinheit 19 nicht jedesmal bei kurzzeitigen Laständerungen verändert wird, jedoch kritische Istwerte sofort verarbeitet werden.

Anstatt die Drehmoment-Drehzahlsollwertepaare $n_s$ und M des Sollwertefeldes 45 in dem Festwertspeicher 35 abzulegen, können die Grenzen des Sollwertefeldes 45 durch eine Formel für eine das gesamte Sollwertefeld 45 umschließende Kurve oder durch mehrere Formeln von aneinander anschließenden Kurvenstücken im Festwertspeicher 35 gespeichert sein. Durch einen mathematischen Algorithmus bestimmt dann die Prüfeinheit 31 für einen gemessenen Drehzahlistwert n die zugehörigen Drehmomentwerte auf der Kurve bzw. den Kurvenstücken. Der gemessene Drehmomentistwert wird mit den berechneten Drehmomentwerten der Kurve bzw. der Kurvenstücke verglichen. Liegt er zwischen zwei errechneten Drehmomentwerten, so liegt das gemessene Drehzahl-Drehmomentistwertepaar n und M im Sollwertefeld 45. Ist er größer oder kleiner, so liegt er außerhalb des Feldes 45 und die Vorgabe des neuen Drehzahlsollwertes $n_s$ kann, wie oben bereits beschrieben, erfolgen.

Anstelle den Motor 1 mit der Regelvorrichtung in dem Sollwertefeld 45 mit minimalem Treibstoffverbrauch zu betreiben, können z. B. Felder ausgewählt werden, in denen der Motor 1 extrem erschütterungsfrei und damit leise arbeitet, oder in denen er besonders wenig Abgase abgibt. Die im Festwertspeicher 35 abgelegten Daten können rechnerisch oder experimentell ermittelt sein. Auch kann anstelle eines zweidimensionalen Sollwertefeldes 45 mit der Drehzahl $n_s$ und dem Drehmoment M des Motors 1 als Koordinaten, ein mehrdimensionaler Bereich mit anderen oder zusätzlichen Motorausgangssollwerten als Koordinaten abgelegt sein. Als andere Koordinaten kommen z. B. Rußgehalt der Abgase, $NO_x$-Gehalt, Lärmemission o. a. in Betracht.

Weiter besteht die Möglichkeit den Festwertspeicher 35 umschaltbar auszulegen, um je nach Einsatz der Baumaschine eine Optimierung auf minimalen Teibstoffverbrauch, auf rasches Reagieren bei Lastwechseln oder auf ein beliebiges anderes Verhalten umzuschalten.

Anstelle eines Proportionalreglers 4 können auch Regler mit Integral- und Differentialteil verwendet werden. Auch kann anstelle des Drehzahlmessers 2 als Abfühlelement z. B. eine Abgassonde vorgesehen sein und das Stellglied z. B. neben der Treibstoffzufuhr die Luftzufuhr für die Verbrennung einstellen.

Der durch die Erfindung erzielte Vorteil ist im wesentlichen darin zu sehen, daß die gesamte Regelung innerhalb eines weitgehend optimalen Sollwertefeldes 45 der Motorausgangssollwerte erfolgt, wobei die Regelvorrichtung entlang einer Regelkennlinie ausregelt und erst bei Herausfallen aus dem Sollwertfeld 45 die Regelkennlinie des Reglers 4 verschoben und der Stellwert der Leistungsübertragungseinstelleinheit 19 verändert wird. Hierdurch wird eine häufige Verstellung der Leistungsübertragungseinheit 7 schon bei kleinen Laständerungen vermieden. Da die Verstellung der Leistungsübertragungseinheit 7 träge ist, können hierdurch verhältnismäßig rasche Laständerungen aufgefangen werden.

Die Überwachungs- und Einstelleinrichtung 5 kann als Baueinheit ausgebildet sein und einfach in die mit dem Drehzahlmesser 2 als Abfühlelement, der Treibstoffeinspritzpumpe 3 als Stellglied und dem Regler 4 ausgerüstete Regelstrecke des Motors 1 eingefügt werden, wobei die Überwachungs- und Einstelleinrichtung 5 an den bereits vorhandenen Drehzahlmesser 2 angeschlossen und die bereits vorhandene Treibstoffeinspritzpumpe 3 als Stellglied zur Einstellung der eingespritzten Treibstoffmenge (Motorspeisewert) mit dem Meßgerät 46 zur Ermittlung der tatsächlichen eingespritzten Treibstoffmenge versehen und mit der Überwachungs- und Einstelleinrichtung 5 verbunden wird. Zur Regelung wird nur der Sollwert des Reglers 4 und allenfalls die Stellgröße des Leistungsübertragungseinstellelements 19 durch die Überwachungs- und Einstelleinrichtung 5 geändert.

## Ansprüche

1. Regelvorrichtung für einen Verbrennungsmotor, insbesondere einen Dieselmotor (1), mit einem Abfühlelement (2) zum Ermitteln eines ersten Motorausgangsistwerts (n), einem Stellglied (3) zum Einstellen eines Motorspeisewerts (E) und einem Regler (4) mit einstellbarer Führungsgröße eines ersten Motorausgangssollwerts ($n_s$), der das Stellglied (3) in Abhängigkeit von der Regelabweichung zwischen ersten Motorausgangsist- und -sollwert (n, $n_s$) einstellt, gekennzeichnet durch eine Überwachungs- und Einstelleinrichtung (5) mit einem Festwertspeicher (35), in dem die Grenze mindestens eines Bereichs (45) oder die Koordination von diesen bestimmenden Punkten in einem mindestens zweidimensionalen Motorausgangssollwert-Koordinatensystem (n, M) mit den ersten ($n_s$) und mit zweiten (M) Motorausgangssollwerten zugeordneten Koordinaten abgelegt sind, einer Ermittlungseinheit (29, 47) zur Ermittlung eines zweiten Motorausgangsistwertes (M), einem Führungsgrößengeber (36), und einer Prüfeinheit (31), die prüft, ob ein durch den jeweiligen ersten und zweiten Motorausgangsistwert (n, M) bestimmter Punkt im Koordinatensystem innerhalb oder außerhalb des Bereichs (45) liegt, und im letzteren Fall an den Führungsgrößengeber (36) ein Signal abgibt, der bei Vorliegen des Signals dem Regler (4) eine neue Führungsgröße vorgibt, derart, daß der durch den jeweiligen ersten und zweiten Motorausgangsistwert (n, M) bestimmte Punkt im Koordinatensystem wieder in den Bereich (45) zu liegen kommt.

2. Regelvorrichtung nach Anspruch 1, dadurch gekennzeichnet, daß im Festwertspeicher (35) die Grenzen eines zweiten, unerwünschte Motorausgangswerte und eines dritten, verbotene Motorausgangswerte enthaltenden Bereichs (49 - 54) oder die Koordinaten der die Bereiche (49 -54) bestimmenden Punkte abgelegt sind, wobei die Prüfvorrichtung (31) prüft, ob ein durch den jeweiligen er sten und zweiten Motorausgangsistwert (n, M) bestimmter Punkt im zweiten oder dritten Bereich (49 - 54) liegt, und wenn er im zweiten Bereich (52, 53, 54) liegt an den Führungsgrößengeber (36) ein Signal abgibt, derart, daß der Punkt unter wenigstens annähernder Beibehaltung derselben Leistungsübertragung wieder in den ersten Bereich (45) zu liegen kommt, und wenn er im dritten Bereich (49, 50, 51) liegt, an den Führungsgrößengeber (36) ein Signal abgibt, derart, daß der Punkt unter Änderung der Leistungsübertragung wieder in den ersten Bereich (45) zu liegen kommt.

3. Regelvorrichtung nach Anspruch 1 oder 2, dadurch gekennzeichnet, daß die Grenze bzw. Grenzen als eine in bezug auf das Koordinatensystem (n, M) definierte Formel im Festwertspeicher (35) gespeichert ist.

4. Regelvorrichtung nach einem der Ansprüche 1 bis 3, dadurch gekennzeichnet, daß die Prüfeinheit (31) oder der Führungsgrößengeber (36) ein in seiner Verzögerungszeit einstellbares Zeitglied hat, und der Führungsgrößengeber eine neue Führungsgröße und/oder neue Stellgröße nur dann abgibt, wenn der durch den jeweiligen ersten und zweiten Motorausgangsistwert (n, M) bestimmte Punkt im Koordinatensystem sowohl zu Beginn als auch am Ende der Zeitspanne der Verzögerungszeit außerhalb des ersten Bereichs (45) liegt.

5. Regelvorrichtung nach einem der Ansprüche 1 bis 4 für einen Dieselmotor (1), dadurch gekennzeichnet, daß das Abfühlelement (2) die Drehzahl (n) der Welle (11) des Motors (1) als ersten Motorausgangsistwert mißt, das Stellglied (3) eine dem laufenden Motor (1) pro Arbeitsgang eingespritzte Treibstoffmenge (E) als Motorspeisewert einstellt, der Regler (4) ein Proportionalregler ist, und die Ermittlungseinheit (29; 47) ein drehzahlabhängiges Drehmoment (M) des Motors (1) als zweiten Motorausgangsistwert ermittelt.

6. Regelvorrichtung nach Anspruch 5, dadurch gekennzeichnet, daß die Ermittlungseinheit (29; 47) mit einem Mengenmeßgerät (46), welches die pro Arbeitsgang in den Motor (1) eingespritzte Treibstoffmenge (E) mißt, und mit dem Abfühlelement (2) verbunden ist, um aus der eingespritzten Treibstoffmenge (E) und der Drehzahl (n) das drehzahlabhängige Drehmoment (M) des Motors (1) zu ermitteln.

7. Regelvorrichtung nach Anspruch 5 oder 6, dadurch gekennzeichnet, daß die Grenze des ersten Bereichs (45) einen ersten, durch eine maximale Belastungskurve (37) des Motors (1) bestimmten Grenzabschnitt, einen zweiten, durch eine erste einer maximalen Drehzahlführungsgröße zugeordneten Regelkennlinie (44) des Reglers (4) bestimmten Grenzabschnitt, einen dritten, durch einen vorgegebenen Wert eines leistungsnormierten maximalen Treibstoffverbrauchs ($V_4$) des Motors (1) bestimmten Grenzabschnitt und einen vierten, durch eine zweite einer minimalen Drehzahlführungsgröße zugeordneten Regelkennlinie (47) des Reglers (4) bestimmten Grenzabschnitt hat.

8. Regelvorrichtung nach einem der Ansprüche 1 bis 7, dadurch gekennzeichnet, daß die Überwachungs- und Einstelleinrichtung (5) als Baueinheit ausgebildet ist, die an den aus dem Abfühlelement (2), dem Stellglied (3) und dem Regler (4) gebildeten Regelkreis angeschlossen ist.

9. Regelvorrichtung nach einem der Ansprüche 1 bis 8, gekennzeichnet durch, mindestens einen zusätzlichen Festwertspeicher und einen Umschalter, der durch manuelle Auswahl den jeweiligen Festwertspeicher mit der Prüfeinheit (31) verbindet, oder mindestens einen zusätzlichen Festwertspeicher, einen Umschalter, der durch manuelle Auswahl den jeweiligen Festwertspeicher mit der Prüfeinheit (31) verbindet, und mindestens ein weiteres Abfühl element oder mindestens eine weitere Ermittlungeinheit, wobei in dem bzw. den zusätzlichen Festwertspeichern die Grenzen mindestens eines zusätzlichen Bereichs in einem mindestens zweidimensionale Motorausgangssollwert-Koordinatensystem mit den ersten und zweiten oder anderen Motorausgangsollwerten oder die Koordinaten des den jeweiligen Bereich bestimmenden Punkte abgelegt sind.

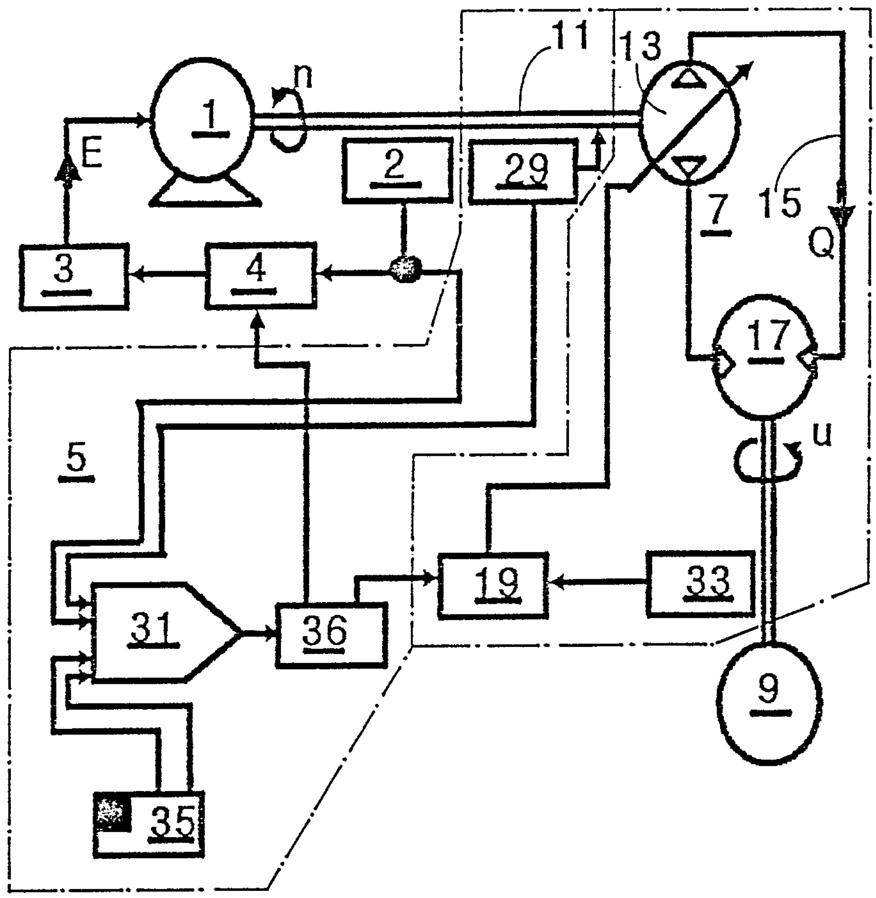
1
n
11
13
2
29
E
7
15
Q
3
4
17
u
5
19
33
31
36
9
35

Fig. 1

Fig. 2

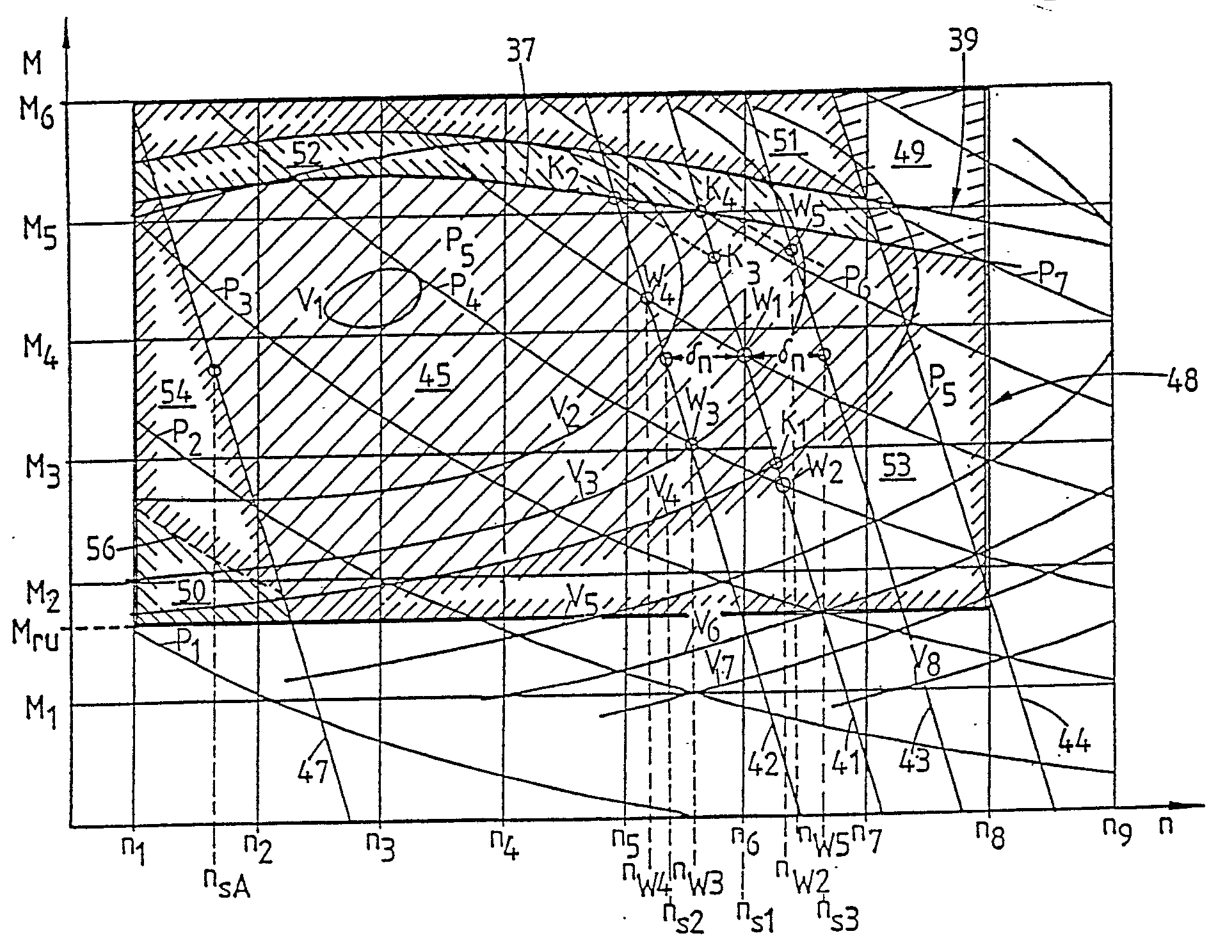
M
M6
M5
M4
M3
M2
Mru
M1
37
39
52
51
49
K2
K4
W5
P5
K3
P7
P3
V1
P4
W4
P6
W1
δn
δn
54
45
48
P5
P2
V2
W3
K1
53
V3
W2
V4
56
50
V5
V6
P1
V7
V8
47
42
41
43
44
n1
n2
n3
n4
n5
n6
nW5
n7
n8
n9
n
nsA
nW4
nW3
nW2
ns2
ns1
ns3

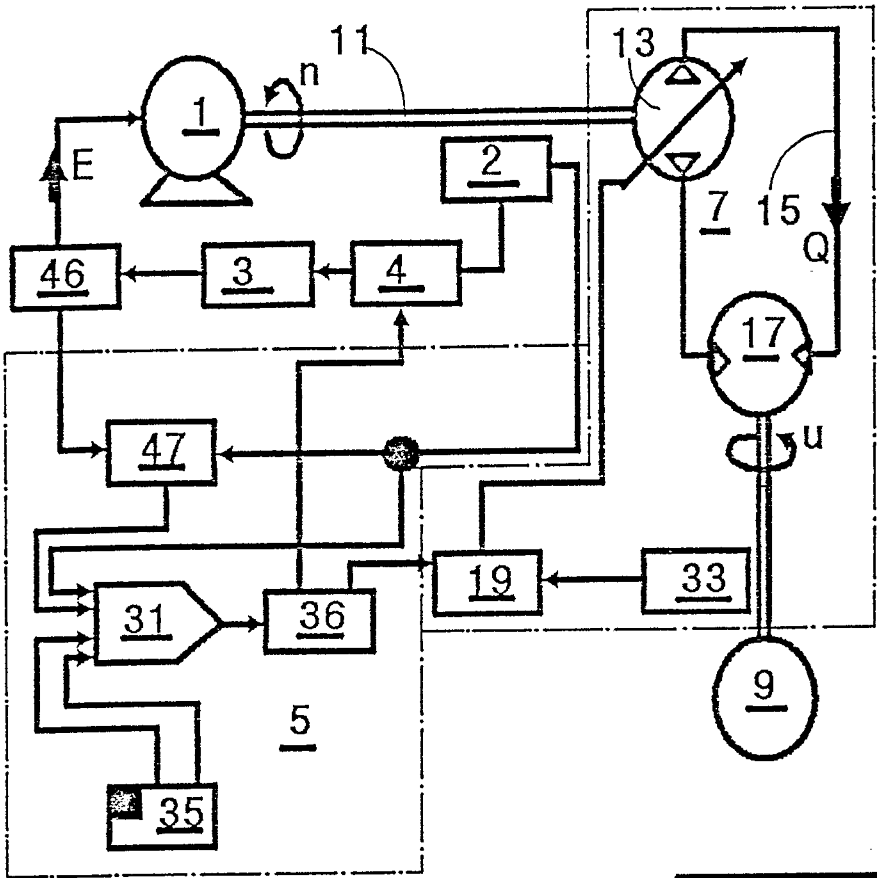
11
n
13
1
E
2
7
15
Q
46
3
4
17
u
47
19
33
31
36
9
5
35

Fig. 3

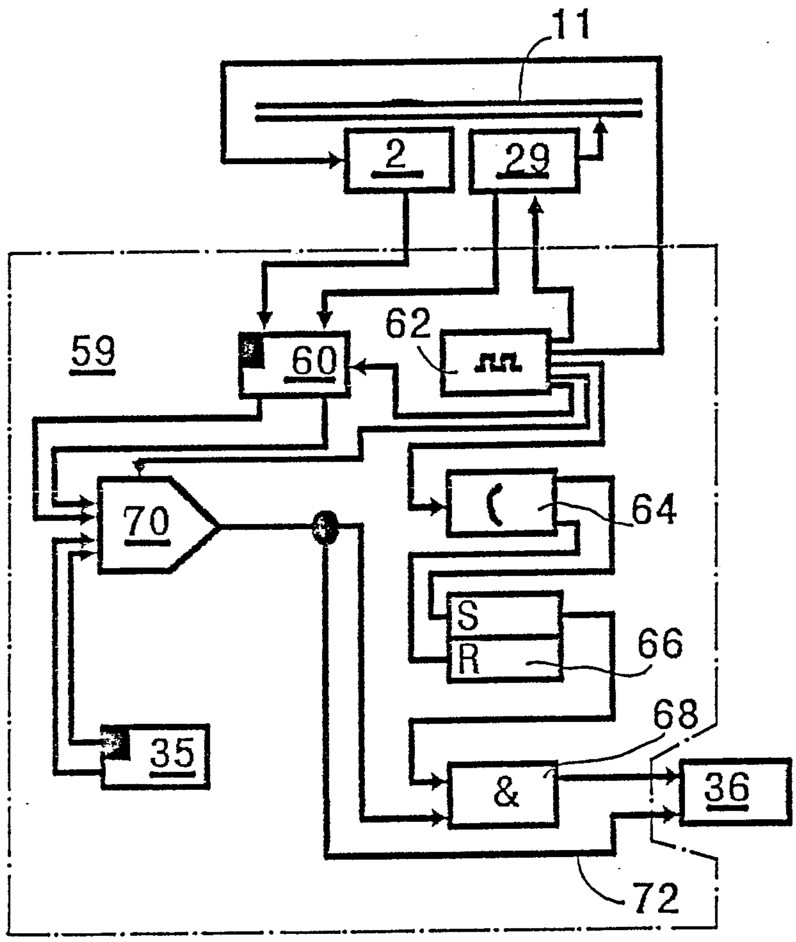
11
2
29
59
62
60
70
64
S
R
66
68
35
&
36
72

Fig. 4

Europäisches Patentamt

# EUROPÄISCHER RECHERCHENBERICHT

Nummer der Anmeldung

EP 89 81 0968

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 8, no. 170 (M-315)(1607) 07 August 1984, & JP-A-59 65563 (DIESEL KIKI K.K.) 13 April 84, * das ganze Dokument * --- | 1, 4-6 | F02D41/38 F02D41/24 |
| A | PATENT ABSTRACTS OF JAPAN vol. 9, no. 57 (M-363)(1780) 13 März 85, & JP-A-59 192839 (YANMAR DIESEL K.K.) 1 November 84, * das ganze Dokument * --- | 1, 3, 7, 9 | |
| A | DE-A-3210810 (MATARO CO. LTD.) * Seite 10, Zeile 19 - Seite 12, Zeile 35 * * Seite 15, Zeile 1 - Seite 18, Zeile 25 * * Seite 20, Zeile 1 - Seite 23, Zeile 27; Figuren 1-3 * --- | 1, 2, 4 | |
| A | FR-A-2557924 (ROBERT BOSCH GMBH.) * Seite 1, Zeile 5 - Seite 7, Zeile 12; Figuren 1-3 * ----- | 1, 4-7 | |
| | | | RECHERCHIERTE SACHGEBIETE (Int. Cl.5 ) |
| | | | F02D |

Der vorliegende Recherchenbericht wurde für alle Patentansprüche erstellt

| Recherchenort | Abschlußdatum der Recherche | Prüfer |
|---|---|---|
| DEN HAAG | 15 FEBRUAR 1990 | LAPEYRONNIE P.J. |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)